# EUROPEAN PATENT SPECIFICATION

(11) **EP 1 290 476 B1**
(45) Date of publication and mention of the grant of the patent: **25.08.2004**
(21) Application number: 01934248.4
(22) Date of filing: 06.06.2001
(51) Int. Cl.: G01W 1/17, A43B 13/00

(54) **METHOD TO DETERMINE A MATERIAL HAVING CHARACTERISTICS OF HEAT REGULATION AND MATERIAL OBTAINED WITH SAID METHOD**
VERFAHREN ZUR BESTIMMUNG EINES MATERIALS MIT WÄRMEAUSTAUSCHREGULIERENDEN EIGENSCHAFTEN SOWIE DURCH DAS VERFAHREN HERGESTELLTES MATERIAL
PROCEDE DE DETERMINATION DE MATERIAU A CARACTERISTIQUES DE REGULATION THERMIQUE ET MATERIAU OBTENU AU MOYEN DE CE PROCEDE

(30) Priority: 07.06.2000 IT UD000119
(43) Date of publication of application: 12.03.2003
(73) Proprietor: OLIP ITALIA SpA, 37010 Cola' di Lazise (VR) (IT)
(72) Inventor: DE MONTE, Stefano, I-33100 Colugna (IT); MORO, Alessandro, I-30030 Cazzago di Pianiga (IT); SCAPIN, Marco, I-30031 Dolo (IT)
(74) Representative: Petraz, Gilberto Luigi
(86) International application number: PCT/IB2001/000985
(87) International publication number: WO 2001/094986

(56) References cited:
- US-A- 4 055 699
- FASCHING M M ET AL: "ANWENDUNG THERMISCHER SPRITZVERFAHREN IM RAPID PROTOTYPING UND IN DER SENSORIK" ELEKTROTECHNIK UND INFORMATIONSTECHNIK, SPRINGER VERLAG, WIEN, AT, vol. 111, no. 2, 1994, pages 50-51-59, XP000439490 ISSN: 0932-383X

## Description

### FIELD OF THE INVENTION

The invention concerns a method to determine a material having desired characteristics of heat regulation, to be used in association with parts of the human body to ensure conditions of heat compatibility for the user in every environmental condition.

The invention also concerns the material obtained with the method.

To be more exact, the invention concerns a technique to determine and characterize a material of which at least the parameters of heat conductivity are obtained analytically, so as to ensure maximum proximity to a condition of thermophysiological comfort in relation to the environmental conditions in which the user finds himself.

The invention is applicable substantially in the design of every type of article of clothing, but is preferentially applied in making footwear, body suits, head-covers, padding, gloves or similar.

### BACKGROUND OF THE INVENTION

It is well-known that in the design of articles of clothing thermophysiological comfort is a fundamental objective, in order to satisfy the constantly increasing requirements of consumers.

In this context, studies have been carried out to design materials able to simultaneously guarantee, for example, conditions wherein heat is retained and conditions wherein the material can breathe, so that a degree of comfort can be approached even in difficult environmental conditions. However, present techniques of designing materials do not provide methods suitable to analytically determine the physical parameters of a material (mainly heat conductivity and thickness) in order to obtain technological characteristics of heat insulation which can at least approach subjective conditions of thermophysiological comfort.

Therefore, materials currently proposed only partly achieve their purpose, and only in certain environmental conditions, so they do not offer a versatile and efficacious solution.

US-A-4,055,669 disclose a multi-layer insole comprising a plurality of layer, four in the case, each of different material and each able to perform a specific function in the use of a relative footwear. This document does not teach how to find one material having required features of heat conductivity to be used in the design of a footwear.

The present Applicant has devised and developed this invention to overcome these shortcomings with an innovative solution suitable to overcome the limits of the state of the art and to obtain further advantages.

### SUMMARY OF THE INVENTION

The invention is set forth and characterized in the respective independent claims, while the dependent claims describe other characteristics of the main embodiment.

The purpose of the invention is to obtain a method for the analytical characterization and design of a heat insulating material to be associated with a part of the human body and having heat-regulating characteristics such as to ensure conditions of thermophysiological comfort on a vast range of users and in environmental conditions which may even be very variable.

The invention is applied in designing materials to be used in the field of footwear, clothing, accessories and other objects which can be associated with the human body.

The invention allows to obtain a quantitative indication of the physical characteristics and the parameters of heat insulation, at least in terms of resistivity or heat conductivity, which a material must possess in order to guarantee the user a condition as near as possible to a statistical condition of thermophysiological comfort.

The method according to the invention provides a preliminary step wherein the subjective conditions of thermophysiological comfort are statistically identified.

To be more exact, on a significant sample of subjects identified as intended for the application, identified and selected for a specific target for which the garment to be designed is directed, a plurality of tests and measurements of a biomedical type is carried out.

By specific target we mean a particular and selected typology of persons grouped together by sex, age, build or otherwise.

During this statistical identification, according to a variant, the method provides to take into consideration the possible presence of malformations, anomalous behavior (for example above or below average perspiration), eating habits, pathologies or otherwise.

The tests and measurements serve to define the conditions of surface temperature and/or surface humidity of the part of the body concerned, and the relative heat exchange with the environment, which statistically characterize, on said selected sample, a subjective condition of thermophysiological comfort.

To be more exact, these tests and measurements serve to identify the microclimatic parameters, for example temperature and humidity, of an environment wherein the part of the body is to be found, for example inside a shoe; according to said parameters, a substantial constancy is achieved of the thermal power exchanged between part of the body and outside environment through an insulating layer, and a minimum value of perspiration is obtained.

Then, in a preferential embodiment, some limiting physical characteristics of the material are defined, such as the size, the thickness and the general thermal properties, which are used as contour conditions, or external constraints, for the design of the material itself.

According to a variant, typical parameterized environmental conditions are added as other contour conditions, characteristic of the probable context of use, corresponding, for example, to the most probable situations in which the garments to be designed will be used. For example, according to a first embodiment, a specific geographical area where it will probably be used may be identified, together with a typical period of time, for example a season.

According to a variant, a typical environment of use may be identified, for example an internal, home environment, or a work environment, or on outside environment of probable use.

With this identification, parameters can be defined relative to the thermal aspects which most characterize the use of the article of clothing which contribute, for example in the case of footwear, to forming the microclimate inside the shoe itself according to which conditions of comfort are obtained or not.

Finally, a simulation model is identified suitable to analytically describe the development of the heat propagation, and/or the heat exchange in terms of power dispersed, between part of the body and outside environment through the layer of heat insulating material which has to be determined.

By using this simulation model, and by means of an iterative process, the physical parameters of the material to be determined, in particular its heat conductivity or resistivity, and hence the insulation characteristics, are progressively modified starting from a value assumed as an initial value.

This progressive modification continues until the simulation model converges towards those conditions of heat exchange and temperature distribution which have been identified by the subjective statistical identification as corresponding to situations of minimum perspiration and substantial constancy of power dispersed.

The result of this iteration, with an inverse and progressive process of approaching the ideal condition, leads to obtaining the physical and quantitative parameters of the material to be looked for; these parameters are used in the design and in the construction of the article of clothing to obtain desired conditions of thermophysiological comfort.

In a preferential embodiment of the invention, the material used for the heat regulation consists of at least a sheet made of polymeric material of a desired thickness, wherein at least a metallic substance has been incorporated, of a quantity such as to take the heat conductivity of the compound material thus obtained to the value determined by the iterative calculation described above.

In other words, after having determined the value of heat conductivity to be obtained in order to achieve the condition of thermophysiological comfort, in the mixture of polymeric material a set quantity of suitably chosen metallic substances is progressively added and mixed, in order to modify the heat conductivity of the compound and take it to the desired value.

To develop the method of calculation, the initial value of heat conductivity can be the one corresponding to the sheet of polymeric material alone, which is then progressively modified with progressive additions of one or more metallic substances until the condition of thermophysiological comfort desired is reached.

In a preferential embodiment, the metallic substance consists of aluminium.

An addition of aluminium in a quantity in the range of 10% in weight, with respect to the overall weight of the material thus obtained, allows to increase the specific heat conductivity of the compound material by a value comprised between 10 and 18%; an addition of said substance in a quantity in the range of 40% in weight allows to increase the specific heat conductivity of the compound material as much as 250ö300% with respect to the value of the basic polymeric material.

According to a variant, said metallic substance consists of copper, nickel, noble metals or other metals having similar characteristics, or mixtures thereof.

### BRIEF DESCRIPTION OF THE DRAWINGS

These and other characteristics of the invention will be clear from the following description of a preferential embodiment, given with reference to the attached drawings
wherein:
- Fig. 1: shows a block diagram exemplifying the method according to the invention;
- Fig. 2: is a schematic illustration of a model of a foot associated with a shoe to which the method according to the invention is applied;
- Fig. 3: shows a graph representing the power dispersed by the foot as the environmental temperature varies;
- Fig. 4: shows a graph representing the evaporational behavior of the foot as the environmental temperature varies;
- Fig. 5: is a block diagram of the procedure of iterative calculation to obtain the values of conductivity and thickness of the material which determine the thermal equilibrium of comfort, hereafter defined as heat regulating.

### DETAILED DESCRIPTION OF PREFERENTIAL EMBODIMENT

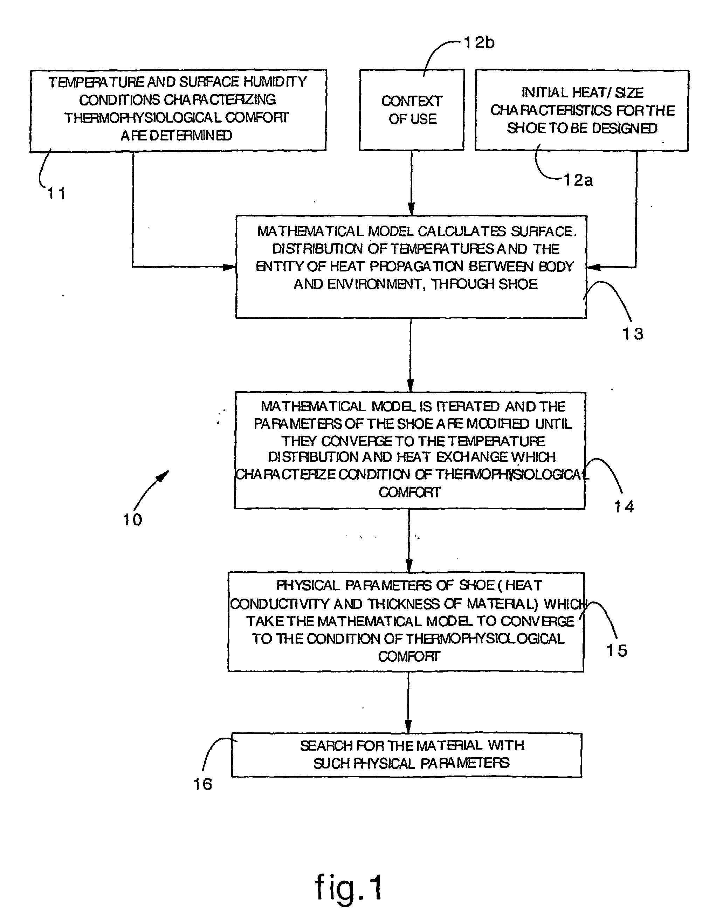

With reference to Fig. 1, it is shown a block diagram exemplifying the method according to the invention, in this case applied to the design of a material for a shoe.

The shoe is designed by determining the interface behavior of the foot with the environment, which allows to characterize the geometry and the heat parameters of the materials to be used to achieve a condition of thermophysiological comfort.

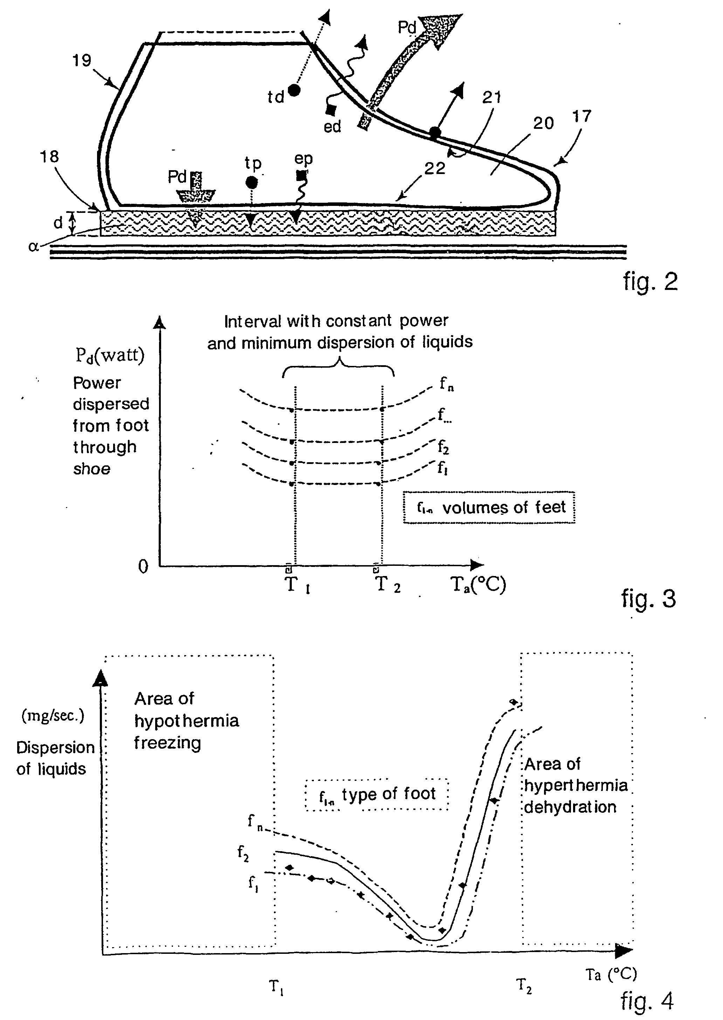

The shoe is indicated in Fig. 2 by the reference number 17, and consists of a sole 18 and an upper 19. Sole 18 and upper 19 have characteristics of heat insulation which can be identified by the relative parameters of heat conductivity "α" and thickness (indicated by d in the case of the sole 18).

The aim of the invention is to search for such parameters "α" and d thanks to which the condition of thermophysiological comfort is achieved; once these specific parameters have been obtained, it is possible to look for and design the suitable material in order to guarantee that such conditions of comfort are obtained.

Even if the example reported hereafter refers to a shoe 17 associated with a foot 20, the teaching of the invention can be applied substantially to every article of clothing which can be associated to a part of the body, whether it be an anatomical overall, a head-cover, a pair of gloves, padding or similar.

In the first step of the method, indicated generally with the reference number 10, a procedure 11 is performed to determine the microclimatic conditions of the foot 20, which characterize the subjective condition of thermophysiological comfort.

This is achieved by means of a statistical quantitative characterization of the heat exchange, in terms of power dispersed Pd between foot 20, possibly distinguishing between top 21 and bottom 22 thereof, and the environment in various environmental conditions. This statistical characterization is obtained by performing sequences of biomedical tests and measurements on a significant sample of subjects grouped together according to a specific target, previously identified, of people for whom the application is intended.

By means of such tests and measurements, which are based mainly on the detection of the power dispersed by the foot 20 and on the quantity of liquids produced due to evaporation as the environmental temperature varies, we obtain values of temperature and surface skin humidity which define the parameters corresponding to a condition of thermophysiological comfort.

Two examples of the results of such tests are shown in the graphs in Figs. 3 and 4.

The graph in Fig. 3 shows the development of the power dispersed, in watts, by a foot 20 as the environmental temperature Tₐ varies for a plurality of different feet, indicated by f₁-fₙ.

From this graph we see how for temperatures comprised between T₁ and T₂ we obtain an interval with a substantially constant power, wherein there are no significant variations in the surface temperature of the foot 20 although there is a variable environmental temperature Tₐ.

The graph in Fig. 4 shows the development of the dispersion of liquids (perspiration) through the foot 20 in conditions of variable environmental temperature, here too for a plurality of different types of foot f₁-fₙ.

The graph shows a minimum value which defines a reduced interval of environmental temperature wherein there is a minimum dispersion of liquids. Values much above and much below this temperature corresponding to the minimum perspiration identify, respectively, areas of hyperthermia and dehydration, for temperatures of more than T₂, and areas of hypothermia and freezing, for temperatures of less than T₁.

In this way we obtain a parameterization of the environmental conditions, in terms of temperature and humidity, which have to be reached in order to obtain desired conditions of thermophysiological comfort for the user of the shoe.

In parallel fashion, through two steps indicated by 12a and 12b, contour conditions or external constraints are defined, connected to the design of the shoe 17: on the one hand (12a) the physical characteristics of the shoe (length, width, thickness and thermal properties used as starting values, both for the sole 18 and for the upper 19) and on the other hand the context of use (12b) with the parameters relative to the environmental conditions in which the user is most likely to wear the shoe 17 to be designed.

The parameters relative to the environmental conditions are identified according to the geographical areas of most probable use, working or domestic habits, the types of residential buildings, the means of transport used, and hence to the relative covering surfaces, and others.

After they have been subjected to statistic parameterization, the parameters relative both to the condition of thermophysiological comfort and also the contour conditions cited above are provided as input data to a mathematical model, indicated 13, able to simulate the behavior of a foot 20 in terms of heat propagation from the foot 20 towards the outside environment through said insulating layers consisting of sole 18 and upper 19. According to the environmental conditions and the parameters of the insulation material set as starting data, said mathematical model supplies as output data the thermal map on the surface of the foot 20 and the thermal power dissipated towards the outside environment through the layers of insulation 18 and 19.

To be more exact, by means of said mathematical model it is possible to calculate the skin temperature tp, the quantity of evaporation ep and the power dispersed Pd relative to the bottom 22 of the foot 20, and also the corresponding values td, ed and Pd relative to the top 21 of the foot 20, as the environmental temperature varies.

The insulation characteristics of the material are initially defined according to a value assumed, hypothetically, as a random parameter.

In general, these insulation characteristics can be expressed as a product between the thickness of the material, which can be set as a contour condition and in any case can be modified when the product is optimized, and heat resistivity or conductivity of the material, which is substantially the parameter to be found.

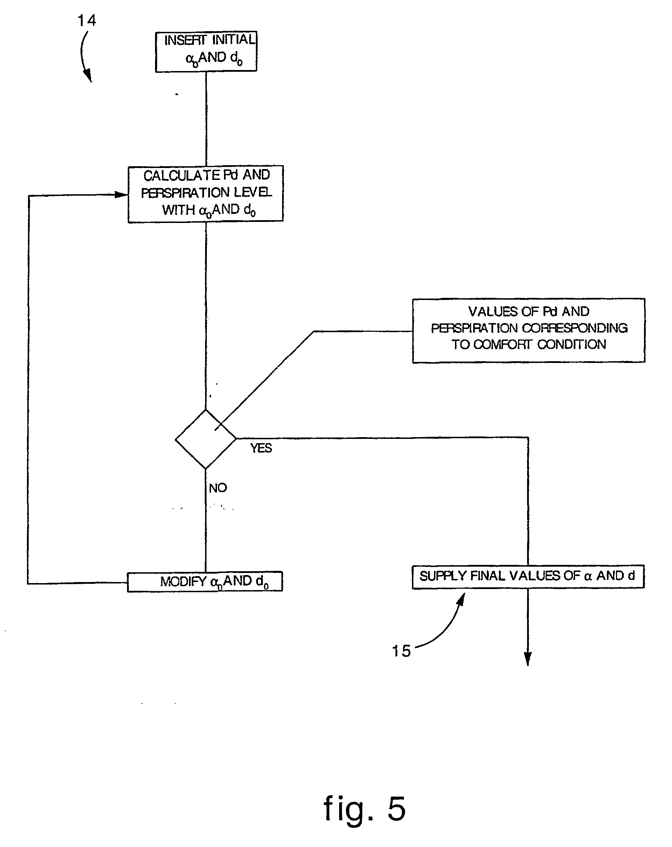

Based on the initial values of conductivity α₀ and thickness d₀ assumed as starting hypotheses, according to the iterative procedure shown diagrammatically in Fig. 5, the mathematical model performs the calculations to define the distribution of temperature over the surface of the foot 20, taking into account the pre-set contour conditions, and in particular it calculates the power dispersed Pd and the level of perspiration reached. These calculated values are compared with the values relative to the conditions corresponding to the thermophysiological comfort supplied as a basic datum by the above mentioned biomedical tests and measurements.

In practice, the mathematical model simulates the conditions of transmission of heat through the layers of insulation, consisting of the sole 18 and the upper 19, between foot 20 and outside air.

Based on this comparison, and according to an iterative method identified by step 14, detailed in Fig. 5, the parameters relative to at least the heat conductivity, and possibly to the thickness, of the material are gradually modified, according to a method of inverse calculation, by a quantity proportional to the difference between the values of power and perspiration determined by the calculation and those ideal values set as an objective.

The calculation is repeated with an iterative process until this difference comes within a field judged to be acceptable, for example with a tolerance equal to ± 1°C. The termination of the iterative calculation with temperatures converging towards the ideal temperature supplies as a parameter, in the step indicated by 15, the values of heat conductivity "α" and of thickness d of the material which, starting from the contour conditions, supply the heat insulation required to reach thermophysiological conditions near to those of comfort. These final values are used during the step of making the shoe 17 to search for the material or materials, indicated by 16, which meet these conditions.

In a preferential embodiment, as heat regulating material a compound material is used consisting of at least a basic layer consisting of polymeric material, mixed with at least a metallic substance added in a controlled quantity such as to modify the heat conductivity characteristics of the base material.

By suitably regulating, and possibly through subsequent approximations, the quantity of metallic substance added to the initial polymeric material, it is possible to progressively modify the value of heat conductivity of the compound material until the value determined by the calculation method is obtained.

According to a preferential embodiment of the invention, the metallic substance consists of aluminium, which has the capacity of determining considerable increases in the heat conductivity with relatively low quantity additions.

Experimental results have shown that, in the case of a sheet of polymeric material having a heat conductivity equal to 0.20 W/m/°C, an addition in the range of 10% in weight of aluminium takes the overall conductivity of the compound material to about 0.23 W/m/°C, while an addition of aluminium in the range of 15% in weight takes the overall conductivity to about 0.26 W/m/°C.

More consistent additions of aluminium give correlated increases in conductivity until an overall conductivity of about 0.60 W/m/°C is obtained by means of an addition of aluminium equal to about 50% in weight of the base material.

According to a variant, instead of or together with the aluminium, the invention provides to add desired and controlled quantities of copper and/or nickel and/or other metals having identical or comparable characteristics.

Although here we have described a preferential embodiment of the invention, it is clear that any skilled person in the art can identify modifications and variants which shall, however, come within the field and scope covered by the claims.

## Claims

1. Method to determine a material having characteristics of heat regulation, said material being able to be used in the design of footwear, body suits, head-covers, padding, gloves or other garments which can be associated with parts of the human body, **characterized in that** it provides to calculate at least the value of heat conductivity (α) of said material able to provide a desired condition of thermophysiological comfort, starting from at least a value of heat conductivity (α₀) and a value of thickness (d₀) of the material assumed as initial value, the method providing a first step wherein the microclimatic conditions to which the part of the body concerned is subject are calculated using, in said calculation, said initial value of heat conductivity (α₀) and thickness (d₀) of the material, and a plurality of subsequent steps wherein said initial value of heat conductivity (α₀) is modified with an iterative process until said microclimatic conditions converge towards said desired condition of thermophysiological comfort.

2. Method as in claim 1, **characterized in that** it provides, at the start of the calculation, to define constraint conditions comprising at least one of the physical parameters of the article of clothing to be designed, selected from length, width or thickness.

3. Method as in claim 2, **characterized in that** said constraint conditions comprise at least statistical environmental parameters relative to the most probable situations of use of the article of clothing to be designed.

4. Method as in claim 3, **characterized in that** said statistical environmental parameters comprise at least the identification of a context of use identified at least by a geographical zone of use, a typical time period, or by the working habits of the user.

5. Method as in claim 1, **characterized in that** said desired condition of thermophysiological comfort of the user is obtained analytically by means of statistical identification of subjective conditions of a plurality of users grouped together according to a specific target.

6. Method as in claim 5, **characterized in that** said specific target comprises persons grouped together at least according to one characteristic chosen among sex, age or build.

7. Method as in claim 5, **characterized in that** said statistical identification is achieved by means of performing, on a significant sample of selected users, tests and measurements of a biomedical type of the temperature and/or skin surface humidity of a part of the body concerned in the application of said garment to be designed.

8. Method as in claim 7, **characterised in that** said statistical identification is suitable to identify microclimatic conditions wherein there is substantial constancy of the heat exchange between part of the body and outside environment through the material to be designed.

9. Method as in claim 7 or 8, **characterized in that** said statistical identification is suitable to identify conditions of minimum perspiration of the part of the body concerned.

10. Method as in any claim hereinbefore, **characterized in that** said calculation of the value of conductivity (α) is performed by means of a model able to simulate the development of the propagation of the heat, at least in terms of power dispersed (Pd), between part of the body and outside environment through the layer of material to be designed, said model receiving as input data at least said contour conditions and at least an initial value, assumed through hypothesis, of heat conductivity (α) of said material.

11. Method as in claim 10, **characterized in that** said model is able to perform a comparison between the conditions of heat propagation and surface temperature distribution according to said input data and the conditions corresponding to the situation of thermophysiological comfort, and to modify with an iterative process at least the value of heat conductivity (α) until said calculated conditions converge towards said situation of thermophysiological comfort with a desired tolerance.

12. Method as in claim 11, **characterized in that** said tolerance is in the order of ± 1°C.

13. Method according to any of claims 1, to 12, wherein the material is a polymeric material having a quantity of at least a suitably chosen metallic substance added thereto in order to modify the heat conductivity of the compound.

14. Method as in claim 13, wherein said metallic substance is alluminum.

15. Method as in claim 13, wherein said metallic substance is copper.

16. Method as in claim 13, wherein said metallic substance is nickel.

17. Material having characteristics of heat regulation and able to be used in the design of footwear, body suits, head-covers, padding, gloves or other garments which can be associated with parts of the human body, said material having a required value of heat conductivity (α), **characterized in that** it consists of polymeric material having a heat conductivity equal to 0,20 W/m/°C and mixed with a quantity of aluminium in the range of 10% in weight to take the overall value of heat conductivity (α) equal to about 0,23 W/m/°C.

18. Material having characteristics of heat regulation and able to be used in the design of footwear, body suits, head-covers, padding, gloves or other garments which can be associated with parts of the human body, said material having a required value of heat conductivity (α), **characterized in that** it consists of polymeric material having a heat conductivity equal to 0,20 W/m/°C and mixed with a quantity of aluminium equal to about 50% in weight to take the overall value of heat conductivity (α) equal to about 0,60 W/m/°C.

## Patentansprüche

1. Verfahren zum Bestimmen eines Materials, das Wärmeregulierungseigenschaften hat, wobei das Material beim Entwerfen von Schuhwerk, Bodysuits, Kopfbedeckungen, Wattierung, Handschuhen oder anderen Kleidungsstücken verwendbar sein soll, die Teilen des menschlichen Körpers zugeordnet werden können,
**dadurch gekennzeichnet, dass**
vorgesehen ist, dass mindestens der Wert der Wärmeleitfähigkeit (α) des Materials berechnet wird, der einen gewünschten thermophysiologischen Komfortzustand schaffen kann, wobei von mindestens einem Wert der Wärmeleitfähigkeit (α₀) und einem Dickenwert (d₀) des Materials ausgegangen wird, der als Anfangswert angenommen wird, wobei das Verfahren Folgendes vorsieht:
einen ersten Schritt, in dem die mikroklimatischen Bedingungen, denen der betreffende Körperteil unterliegt, berechnet werden, wobei bei dieser Berechnung der Anfangswert der Wärmeleitfähigkeit (α₀) und Dicke (d₀) des Materials genutzt werden; und
eine Vielzahl von anschließenden Schritten, in denen der Anfangswert der Wärmeleitfähigkeit (α₀) in einem iterativen Prozess modifiziert wird, bis die mikroklimatischen Bedingungen dem gewünschten thermophysiologischen Komfortzustand angenähert sind.

2. Verfahren nach Anspruch 1,
**dadurch gekennzeichnet, dass**
zu Beginn der Berechnung Randbedingungen vorgesehen werden, die mindestens einen der physischen Parameter des zu entwerfenden Kleidungsstücks aufweisen, der aus Länge, Breite oder Dicke ausgewählt wird.

3. Verfahren nach Anspruch 2,
**dadurch gekennzeichnet, dass**
die Randbedingungen zumindest statistische Umgebungsparameter in Bezug auf die wahrscheinlichsten Gebrauchssituationen des zu entwerfenden Kleidungsstücks aufweisen.

4. Verfahren nach Anspruch 3,
**dadurch gekennzeichnet, dass**
die statistischen Umgebungsparameter zumindest die Identifikation eines Gebrauchszusammenhangs aufweisen, der mindestens durch eine geographische Gebrauchszone, einen typischen Zeitraum oder die Arbeitsgewohnheiten des Benutzers bezeichnet ist.

5. Verfahren nach Anspruch 1,
**dadurch gekennzeichnet, dass**
der vom Benutzer gewünschte thermophysiologische Komfortzustand analytisch erhalten wird durch statistische Identifikation von subjektiven Zuständen einer Vielzahl von Benutzern, die entsprechend einem spezifischen Ziel gemeinsam gruppiert werden.

6. Verfahren nach Anspruch 5,
**dadurch gekennzeichnet, dass**
das spezifische Ziel Personen aufweist, die zumindest nach einer Charakteristik gemeinsam gruppiert werden, die unter Geschlecht, Alter oder Körperbau ausgewählt wird.

7. Verfahren nach Anspruch 5,
**dadurch gekennzeichnet, dass**
die statistische Identifikation erhalten wird, indem an einer signifikanten Stichprobe von ausgewählten Benutzern Tests und Messungen biomedizinischer Art in Bezug auf die Temperatur und/oder Feuchtigkeit der Hautoberfläche eines Körperteils durchgeführt werden, der für die Anwendung des zu entwerfenden Kleidungsstücks eine Rolle spielt.

8. Verfahren nach Anspruch 7,
**dadurch gekennzeichnet, dass**
die statistische Identifikation geeignet ist, um mikroklimatische Bedingungen zu erkennen, bei denen eine erhebliche Konstanz des Wärmeaustauschs zwischen einem Körperteil und der Außenumgebung durch das zu entwerfende Material hindurch gegeben ist.

9. Verfahren nach Anspruch 7 oder 8,
**dadurch gekennzeichnet, dass**
die statistische Identifikation geeignet ist, um Bedingungen minimaler Perspiration des betroffenen Körperteils zu erkennen.

10. Verfahren nach einem der vorhergehenden Ansprüche,
**dadurch gekennzeichnet, dass**
die Berechnung des Werts der Leitfähigkeit (α) mit Hilfe eines Modells ausgeführt wird, das imstande ist, die Entwicklung der Wärmeausbreitung mindestens in Form der verteilten Energie (Pd) zwischen einem Teil des Körpers und der äußeren Umgebung durch die zu entwerfende Materialschicht hindurch zu simulieren, wobei das Modell als Eingangsdaten mindestens die Konturbedingungen und mindestens einen hypothetisch angenommenen Anfangswert der Wärmeleitfähigkeit (α) des Materials empfängt.

11. Verfahren nach Anspruch 10,
**dadurch gekennzeichnet, dass**
das Modell imstande ist, einen Vergleich zwischen den Bedingungen der Wärmeausbreitung und der Oberflächentemperaturverteilung in Abhängigkeit von den Eingangsdaten und den Bedingungen, die der Situation des thermophysiologischen Komforts entsprechen, auszuführen und mit einem iterativen Prozess mindestens den Wert der Wärmeleitfähigkeit (α) zu modifizieren, bis die berechneten Bedingungen sich der Situation des thermophysiologischen Komforts mit einer gewünschten Toleranz annähern.

12. Verfahren nach Anspruch 11,
**dadurch gekennzeichnet, dass**
die Toleranz in der Größenordnung von ±1 °C liegt.

13. Verfahren nach einem der Ansprüche 1 bis 12,
wobei das Material ein Polymermaterial ist, dem eine Menge von mindestens einer geeignet gewählten metallischen Substanz hinzugefügt wird, um die Wärmeleitfähigkeit des Verbundmaterials zu modifizieren.

14. Verfahren nach Anspruch 13,
wobei die metallische Substanz Aluminium ist.

15. Verfahren nach Anspruch 13,
wobei die metallische Substanz Kupfer ist.

16. Verfahren nach Anspruch 13,
wobei die metallische Substanz Nickel ist.

17. Material, das Wärmeregulierungseigenschaften hat und bei der Herstellung von Schuhwerk, Bodysuits, Kopfbedeckungen, Wattierung, Handschuhen oder anderen Kleidungsstücken verwendbar sein kann, die Teilen des menschlichen Körpers zugeordnet werden können, wobei das Material einen erforderlichen Wert der Wärmeleitfähigkeit (α) hat,
**dadurch gekennzeichnet, dass**
es aus Polymermaterial besteht, das eine Wärmeleitfähigkeit gleich 0,20 W/m/°C hat, und mit einer Aluminiummenge in dem Bereich von 10 Gew.-% vermischt ist, um den Gesamtwert der Wärmeleitfähigkeit (α) gleich ungefähr 0,23 W/m/°C zu machen.

18. Material, das Wärmeregulierungseigenschaften hat und bei der Herstellung von Schuhwerk, Bodysuits, Kopfbedeckungen, Wattierung, Handschuhen oder anderen Kleidungsstücken verwendbar sein kann, die Teilen des menschlichen Körpers zugeordnet werden können, wobei das Material einen erforderlichen Wert der Wärmeleitfähigkeit (α) hat,
**dadurch gekennzeichnet, dass**
es aus Polymermaterial besteht, das eine Wärmeleitfähigkeit gleich 0,20 W/m/°C hat, und mit einer Aluminiummenge gleich ungefähr 50 Gew.-% vermischt ist, um den Gesamtwert der Wärmeleitfähigkeit (α) gleich ungefähr 0,60 W/m/°C zu machen.

## Revendications

1. Procédé de détermination de matériau à caractéristiques de régulation thermique, ledit matériau pouvant servir à la création de chaussures, maillots, bonnets, matelassage, gants et autres vêtements qui peuvent être associés à des parties du corps humain, **caractérisé en ce qu'**il prévoit de calculer au moins la valeur de conductibilité thermique (α) dudit matériau capable d'apporter une condition souhaitée de confort thermophysiologique, en partant d'au moins une valeur de conductibilité thermique (α₀) et une valeur d'épaisseur (d₀) du matériau, considérées comme valeurs initiales, le procédé prévoyant une première étape consistant à calculer les conditions microclimatiques auxquelles est soumise la partie concernée du corps en utilisant, dans ledit calcul, lesdites valeurs initiales de conductibilité thermique (α₀) et d'épaisseur (d₀) du matériau, et une pluralité d'étapes ultérieures consistant à modifier ladite valeur initiale de conductibilité thermique (α₀) par un processus itératif, jusqu'à ce que lesdites conditions microclimatiques convergent vers la condition souhaitée de confort thermophysiologique.

2. Procédé selon la revendication 1, **caractérisé en ce qu'**il prévoit, au début du calcul, de définir des conditions de contrainte comprenant au moins l'un des paramètres physiques de l'article vestimentaire à créer, choisi parmi la longueur, la largeur ou l'épaisseur.

3. Procédé selon la revendication 2, **caractérisé en ce que** lesdites conditions de contrainte comprennent au moins des paramètres statistiques environnementaux portant sur les situations d'utilisation les plus probables de l'article vestimentaire à créer.

4. Procédé selon la revendication 3, **caractérisé en ce que** lesdits paramètres statistiques environnementaux comprennent au moins l'identification d'un contexte d'utilisation, identifié au moins par une zone géographique d'utilisation, une durée type, ou par les habitudes de travail de l'utilisateur.

5. Procédé selon la revendication 1, **caractérisé en ce que** ladite condition souhaitée de confort thermophysiologique de l'utilisateur s'obtient de manière analytique au moyen d'une identification statistique des conditions subjectives d'une pluralité d'utilisateurs, regroupés selon une cible particulière.

6. Procédé selon la revendication 5, **caractérisé en ce que** ladite cible particulière comprend des personnes regroupées selon au moins une caractéristique choisie parmi le sexe, l'âge ou la corpulence.

7. Procédé selon la revendication 5, **caractérisé en ce que** ladite identification statistique est réalisée en pratiquant, sur un échantillon significatif d'utilisateurs sélectionnés, des essais et des mesures de type biomédical de la température et/ou de l'humidité en surface de peau d'une partie du corps concernée dans le cadre de l'application dudit vêtement à créer.

8. Procédé selon la revendication 7, **caractérisé en ce que** ladite identification statistique convient à identifier les conditions microclimatiques dans lesquelles il existe une constance importante d'échange thermique entre la partie du corps et l'environnement extérieur, à travers le matériau à créer.

9. Procédé selon la revendication 7 ou 8, **caractérisé en ce que** ladite identification statistique convient à identifier les conditions de transpiration minimum de la partie du corps concernée.

10. Procédé selon l'une quelconque des revendications précédentes, **caractérisé en ce que** ledit calcul de la valeur de conductibilité (α) est effectué au moyen d'un modèle capable de simuler le développement de la propagation thermique, en termes d'énergie dispersée (Pd) au moins, entre la partie du corps et l'environnement extérieur à travers la couche de matériau à créer, ledit modèle recevant pour données d'entrée au moins lesdites conditions de contour et au moins une valeur initiale, prise par hypothèse, de conductibilité thermique (α) dudit matériau.

11. Procédé selon la revendication 10, **caractérisé en ce que** ledit modèle est capable d'effectuer une comparaison entre les conditions de propagation thermique et la distribution de température en surface, en fonction desdites données d'entrée et des conditions correspondant à la situation de confort thermophysiologique, et de modifier par un processus itératif au moins la valeur de conductibilité thermique (α), jusqu'à ce que lesdites conditions calculées convergent vers ladite situation de confort thermophysiologique avec une tolérance souhaitée.

12. Procédé selon la revendication 11, **caractérisé en ce que** ladite tolérance est de l'ordre de ± 1° C.

13. Procédé selon l'une quelconque des revendications 1 à 12, dans lequel le matériau est un matériau polymère comportant une quantité d'au moins une substance métallique convenablement choisie, qui lui est ajoutée afin de modifier la conductibilité thermique du composé.

14. Procédé selon la revendication 13, dans lequel ladite substance métallique est l'aluminium.

15. Procédé selon la revendication 13, dans lequel ladite substance métallique est le cuivre.

16. Procédé selon la revendication 13, dans lequel ladite substance métallique est le nickel.

17. Matériau à caractéristiques de régulation thermique et pouvant servir à la création de chaussures, maillots, bonnets, matelassage, gants et autres vêtements qui peuvent être associés à des parties du corps humain, ledit matériau ayant une valeur requise de conductibilité thermique (α), **caractérisé en ce qu'**il est constitué de matériau polymère ayant une conductibilité thermique de 0,20 W/m/°C et mélangé à une quantité d'aluminium de l'ordre de 10 % en poids, afin de porter la valeur globale de conductibilité thermique (α) à 0,23 W/m/°C environ.

18. Matériau à caractéristiques de régulation thermique et pouvant servir à la création de chaussures, maillots, bonnets, matelassage, gants et autres vêtements qui peuvent être associés à des parties du corps humain, ledit matériau ayant une valeur requise de conductibilité thermique (α) **caractérisé en ce qu'**il est constitué de matériau polymère ayant une conductibilité thermique de 0,20 W/m/°C et mélangé à une quantité d'aluminium égale à 50 % environ en poids, afin de porter la valeur globale de conductibilité thermique (α) à 0,60 W/m/°C environ.
